# EUROPEAN PATENT APPLICATION

(11) **EP 3 992 885 A1**
(43) Date of publication of application: **04.05.2022**
(21) Application number: 21177710.7
(22) Date of filing: 04.06.2021
(51) Int. Cl.: G06Q 20/10, G06Q 20/02

(54) **SYSTEM AND METHOD FOR THE CUSTOMIZED MANAGEMENT OF DONATIONS**

(30) Priority: 30.10.2020 IT 202000025894
(71) Applicant: Biofficina Srls, 87050 Mangone (CS) (IT)
(72) Inventor: SPADAFORA, Francesco, 87050 Mangone (CS) (IT); SOTTILE, Rossella, 87054 Rogliano (CS) (IT); SPADAFORA, Raffaele, 87050 Mangone (CS) (IT)
(74) Representative: Giuliano, Natalia

(57) **Abstract**

System (100) for the customized management of donations, comprising:
- a plurality of identification elements (102a,...102n) configured to be fixed on external surfaces of commercial products comprised in a plurality of product categories (101a,...101n) ;
- an input and management module (104) configured to be activated following the scanning of an identification element, by means of a mobile terminal (103) of a user.

The system (100) comprises a first information acquisition module (105) and a second information acquisition module (106), connected to the input and management module (104) and able to store respectively a first list of beneficiaries of a donation, and a second list of a plurality of unique codes (107a,...107n), said donation being made following the entering of the unique code (107a) in a section of the input and management module (104).

## Description

The present invention relates to a system for the customized management of donations.

The present invention also relates to a method for the customized management of donations.

In particular, the present invention relates to a system for the customized management of donations, of the type which includes electronic components and dedicated computer supports.

Various systems are currently known for the customized management of donations.

A first example of system for the customized management of donations known is described in the text of the question patent CN108711041A, having as its object a donation system based on a blockchain technology and a related method for processing of electronic money. The method includes the steps of configuring each of the donation nodes, beneficiary nodes and verification nodes in the blockchain node, creating a contract between the blockchain nodes, in which each blockchain node uploads the corresponding donation information benefiting from the verification information through the contract, and transmit the contract containing the donation information, beneficiary information or verification information to the blockchain network to share the information with other nodes. Finally, based on one of the above donation information, helpful information and verification information, and a preset coin generation rule, the coin itself is issued to one of the users.

The text of the patent application ITFI20110275A1, on the other hand, has as its object a system for the assisted execution and automatic management of money donations by commercial customers to beneficiaries, for example public or private welfare organizations, social utility and non-profit foundations. The system includes a distributed telematic network equipped with terminal devices, each located in a donation collection point and configured to allow the donor to enter freely, by the donor himself, of an amount to be donated and allow the payment of said amount through the reading of a personal payment card or similar digital payment means, with communication through the telematic network with a banking circuit. The system also allows the acquisition of personal and / or fiscal data of the donor, the communication to a centralized unit of the telematic network of the amount of the amount and the personal and / or fiscal data, and the issuance of a payment receipt.

Finally, patent document KR20180138298A describes a system and method for allowing a store to donate to a beneficiary via a customer. In particular, the selected recipient is at the discretion of the customer. A donation shop, a shop customer, and a donation recipient are registered as members on a donation management server, respectively. A computer in the store receives and verifies data from the customer's donation request, which is then transmitted to the server which processes the donation request and stores the request data in a database. The server then transmits the result of the donation request to the shop computer and to a computer of the donation recipient. The purpose of applying the system is to implement a differentiated way of donation that gives greater motivation to donations to both shops and consumers, with benefits for all three parties, ie shops, consumers and beneficiaries of the donation.

However, the known described systems suffer from limitations such as the problem of being technically undeveloped, in particular in terms of security of the data transmitted in the course of transactions, and the ability to directly select a recipient within a specific list.

Scope of the present invention is to provide a system for personalized management of donations and that is supported by advanced technologies, in particular for what concerns the security of data in transit on the technological support platform, and which gives the possibility to directly select a beneficiary, as well as applicable to a substantial number of types of products, therefore having characteristics such as to overcome the limits that still affect the current systems for the personalized management of donations, with reference to the known technique.

According to the present invention, a system for the customized management of donations is realized, as defined in claim 1.

According to the present invention, a method for the customized management of donations is also realized, as defined in claim 7.

For a better understanding of the present invention is now described a preferred embodiment, purely by way of nonlimiting example, with reference to the alleged figures, in which:

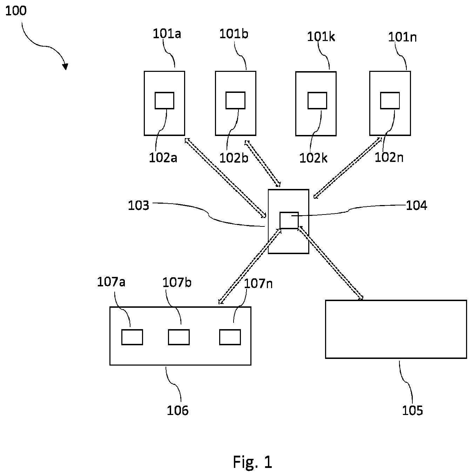

- Figure 1 shows a block diagram of the architecture of a system for the customized management of donations, according to the invention.

With reference to this and figure, a system for the customized management of donations is shown, according to the invention.

In particular, the system 100 for the customized management of donations, comprises:
- a plurality of identification elements 102a,... 102n configured to be fixed on external surfaces of commercial products comprised in a plurality of product categories 101a,... 101n;
- an input and management module 104 configured to be activated following the scanning of an identification element comprised in the plurality of identification elements 102a,... 102n by means of a mobile terminal 103 of a user.

According to an aspect of the invention, as anticipated, the commercial products, eligible for sale at generic operators, are comprised in the plurality of product categories 101a,... 101n, the latter, for example, being represented by soft drinks, shoes, sweets or other types of goods.

According to another aspect of the invention, each of the aforesaid commercial products is packaged or contained in its own wrapping / container, for example a can, a bottle, a cardboard box or plastic material.

According to an aspect of the invention, the system 100 comprises a first module 105 of information acquisition 105 and a second module 106 information acquisition, both connected to the input and management module 104 and adapted to store, respectively, a first list of beneficiaries of a donation, and a second list of a plurality of unique codes 107a, ... 107n.

According to an aspect of the invention, each of these unique codes, present in the second list of the plurality of unique codes 107a, ... 107n, is associated with one and only one of the aforesaid commercial products, and is also indicated on the commercial product itself, for example imprinted on a metal label of a drink or imprinted with a marker on a label or other accessible element inside a box that contains the product.

According to an aspect of the invention, the insertion of the generic unique code, for example 107a, in a specific section of the input and management module 104, allows the donation to be carried out in a personalized manner by a user.

According to another aspect of the invention, each unique code is eliminated from the second list, contained in the second acquisition module 106, following the execution of the donation.

According to an aspect of the invention, the second information acquisition module 106 comprising the second list of the plurality of unique codes 107a, ... 107n is a data base implemented through technology and of the blockchain type.

According to another aspect of the invention, the plurality of element the identifiers 102a, ... 102n is constituted by QR codes.

According to an aspect of the invention, the input and management module 104 displays information on the generic commercial product, following the insertion of the corresponding unique code in the input and management module 104.

In use, the user purchases a commercial product among the various products available in the plurality of product categories 101a,... 101n in charge of a generic merchant, and then scans the relevant identification element, preferably, as mentioned, a QR code, with its mobile terminal 103, for example a smartphone.

According to an aspect of the invention, all the commercial products falling into a specific product category 101a, for example drinks or sweets, have the same identification element 102a, unitary for the specific category, as better visible in figure 1 where it is explained on a graphic level the univocal correspondence between each product category included in the product categories 101a,... 101n and the corresponding identification element included in the identification elements 102a,... 102n.

The scan of the above QR code involves the activation of the input and management module 104 which translates, preferably, in the downloading of a dedicated "app" dedicated for iOS and Android environments, in which the user registers by a login window with confidential credentials. Below, the user accesses a screen showing the first list of beneficiaries of a donation, selecting one and authorizing and making the relative donation, at his discretion, after entering the unique code, shown in the product packaging or stamped on it, in the appropriate section of the app 104.

According to another aspect of the invention, the first list of beneficiaries of a donation is unique for all commercial products included in the plurality of product categories 101a, ... 101n, or includes specific and distinct beneficiaries for each product category.

According to an aspect of the invention, the donation preferably consists in inserting a virtual token in a corresponding virtual piggy bank, for the benefit of the specific beneficiary, for example a charity project, shown in the aforementioned first list.

Advantageously according to the invention, the cancellation or annulment of the specific unique code, once the donation has been made, from the second list, makes it possible not to repeat a second donation by mistake on the same commercial product purchased by the user.

According to an aspect of the invention, the information visible to the user within the app 104, once the specific unique code of the commercial product purchased, for example a soft drink, has been entered, is certified information relating to the authenticity of the product, production chain, the traceability of raw materials, the benefits of the commercial product, and are stored in the second acquisition form 106, like the second list of the plurality of unique codes 107a,... 107n.

Advantageously according to the invention, the adoption of blockchain technologies in the implementation of the aforementioned second acquisition module 106, preferably a database, allows to certify the aforementioned information relating to the commercial product purchased, and to guarantee integrity and security of the relative data in transit on IP protocol with the system 100 in use.

As anticipated, the present invention also relates to a method for the personalized management of donations.

In particular, the method for the personalized management of donations includes the following steps:
- purchasing a commercial product included in a plurality of product categories 101a,... 101n by a user;
- scanning an identification element imprinted on an external surface of the commercial product by means of a mobile terminal 103 of the user;
- accessing by the user through reserved credentials to an entry and management module 104;
- accessing a section of the entry and management module 104 displaying a first list of beneficiaries of a donation, stored in a first acquisition form 105 of information connected to the input and management form 104, by selecting a beneficiary of a donation included in said first list;
- make a donation by the user following the entry in the section of the input and management module 104 of a unique code associated with the commercial product, said unique code being reported on the commercial product or inside one of its packaging, contents in a second list of a plurality of unique codes 107a, ... 107n stored in a second information acquisition module 106 connected to the input and management module 104 and implemented by blockchain technology, each of said unique codes being associated with a corresponding commercial product included in the plurality of product categories 101a,... 101n;
- deleting from the second list of the plurality of unique codes 107a, ... 107n the unique code corresponding to the commercial product, following the previous phase of making a donation.

Therefore, the system and method for the customized management of donations according to the invention consent ono effective and confidential management of donations to projects and causes deserving.

Furthermore, the system for the customized management of donations according to the invention makes it possible to guarantee the security of the transactions and transmission of the data exchanged by the distributed components of the system itself.

Another advantage of the system and the method for the customized management of donations according to the invention is that they are replicable on the large scale for different product categories of commercial products.

Furthermore, the system for the customized management of donations according to the invention is easy to use.

Finally, the system and method for the customized management of donations according to the invention are cheap and simple to be implemented.

Finally, it is clear that the system and method for the customized management of donations here described and illustrated can be subject to modifications and variations without thereby abandoning the scope of the present invention, as defined in the appended claims.

## Claims

1. System (100) for the customized management of donations, comprising:
- a plurality of identification elements (102a,...102n) configured to be fixed on external surfaces of commercial products comprised in a plurality of product categories (101a,...101n) ;
- an input and management module (104) configured to be activated following the scanning of an identification element, included in the plurality of identification elements (102a,...102n), by means of a mobile terminal (103) of a user;
**characterized in** comprising a first information acquisition module (105) and a second information acquisition module (106), connected to the input and management module (104) and able to store respectively a first list of beneficiaries of a donation, and a second list of a plurality of unique codes (107a,...107n), each of said unique codes being associated with a commercial product included in the plurality of product categories (101a,...101n) and included in the commercial product, said donation being made following the entering of the unique code (107a) in a section of the input and management module (104).

2. System (100) according to claim 1, **characterized in that** each unique code included in the plurality of unique codes (107a,...107n) is deleted from the second list, contained in the first information acquisition module (105), following the implementation of the donation.

3. System (100) according to claim 1, **characterized in that** the second information acquisition module (106) comprising the second list of the plurality of unique codes (107a,...107n) is a database implemented through blockchain technologies.

4. System (100) according to claim 1, **characterized in that** the plurality of identification elements (102a,...102n) consists of QR codes.

5. System (100) according to claim 1, **characterized in that** the input and management form (104) displays information about each commercial product included in the plurality of product categories (101a,...101n), following the insertion of the corresponding unique code in the input and management module (104).

6. System (100) according to claim 1, **characterized in that** each unique code included in the plurality of unique codes (107a,...107n), associated with a corresponding commercial product and included on said commercial product, is imprinted over a metal label attached to the commercial product or imprinted through a marker inside a box containing the commercial product.

7. Method for the customized management of donations by means of the system (100) according to one of the previous claims, **characterized in** comprising the steps of:
- purchasing a commercial product by a user, said commercial product being included in a plurality of commercial categories (101a,... 101n);
- scanning an identification element imprinted on an external surface of the commercial product by means of a mobile terminal (103) of the user;
- logging in by the user, by means of confidential credentials, to an input and management module (104);
- accessing a section of the input and management module (104) displaying a first list of beneficiaries of a donation, saved to a first information acquisition module (105) connected to the input and management module (104), by selecting a beneficiary of a donation included in said first list;
- making a donation by the user following the insertion of a unique code associated with the commercial product in the section of the input and management module (104), said unique code being imprinted on the commercial product or in a box containing said commercial product and being included in a second list of a plurality of unique codes (107a,...107n) saved to a second information acquisition module (106) connected to the input and management module (104) and implemented using blockchain technologies, each of said unique codes being associated to a corresponding commercial product included in the plurality of product categories (101a,...101n) ;
- deleting from the second list of the plurality of unique codes (107a,...107n) the unique code corresponding to the commercial product, following the previous step of making a donation.
